# EUROPÄISCHE PATENTANMELDUNG

(11) **EP 0 865 168 A2**
(43) Veröffentlichungstag der Anmeldung: **16.09.1998**
(21) Anmeldenummer: 98103884.7
(22) Anmeldetag: 05.03.1998
(51) Int. Cl.: H04B 1/20, H04L 12/28

(54) **Dezentrales Kommunikationssystem**

(30) Priorität: 12.03.1997 DE 19710169
(71) Anmelder: GRUNDIG Aktiengesellschaft, 90762 Fürth (DE)
(72) Erfinder: Vanselow, Frank, 90762 Fürth (DE)

(57) **Zusammenfassung**

Die Erfindung betrifft ein dezentrales Kommunikationssystem, das beispielsweise zur Versorgung mit Rundfunk-, Fernseh-, und Telefondiensten für ein künftiges IN-House Kommunikationsnetz Verwendung finden kann. Zur Verteilung der unterschiedlichen Dienste wird eine direkte drahtlose Verteilung der Dienste von dem Ort aus vorgeschlagen, wo die Dienste zur Verfügung stehen.

Damit ergibt sich ein dezentrales System, das ohne zusätzlichen Aufwand für die Zuführung der einzelnen Dienste zu einer zentralen Stelle realisiert werden kann.

## Beschreibung

Die Erfindung betrifft ein Kommunikationssystem mit mindestens zwei voneinander unabhängigen Signalquellen.

Bei einem derartigen Kommunikationssystem handelt es sich beispielsweise um ein sogenanntes 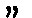 IN-House"-Netz. Das Kommunikationssystem dient der Übertragung von Informationen an verschiedene Endgeräte innerhalb eines Hauses, wie beispielsweise Fernsehgerät, Heizung, Raumüberwachung sowie zwischen diesen.

Der Erfindung liegt die Aufgabe zugrunde, ein Kommunikationssystem anzugeben, das ohne zusätzliche Verkabelung einen Zugriff auf unterschiedliche Dienste innerhalb eines Hauses ermöglicht.

Diese Aufgabe wird durch ein Kommunikationssystem mit den im Anspruch 1 angegebenen Merkmalen gelöst.

Grundkonzept eines derartigen Kommunikationssystems ist somit seine dezentrale Struktur. Bei einer derartigen dezentralen Struktur ist eine gemeinsame Luftschnittstelle für die Endgeräte vorgesehen. In dieser Luftschnittstelle sind sowohl der logische Kontrollkanal bzw. die Kontrollkanäle als auch die jeweiligen Datenkanäle wiederzufinden. Mit Hilfe eines kontinuierlichen Kontrollkanals kann die Intelligenz des Netzwerks auf die verschiedenen Geräte verteilt werden. Damit kann jedes Gerät selbst entscheiden, ob ein Kanalzugriff möglich ist oder nicht. Die Signalquellen der externen Diensteanbieter, wie beispielsweise TV-Dienste, Telefondienste, Rundfunkdienste etc., werden direkt mit den jeweiligen Endgeräten, wie beispielsweise TV-, Rundfunkempfangseinrichtung oder Telefonendgerät, verbunden. Hierdurch erfolgt die Umsetzung auf die beispielsweise als drahtlose In-House-Verbindung ausgebildete Schnittstelle zum Endgerät ohne zusätzlichen Aufwand für die Zuführung zu einer zentralen Stelle. Bei einer bidirektionalen Verbindung, wie dies beispielsweise in jedem Fall bei Telefondiensten erforderlich ist, ergibt sich im Vergleich zu einer zentralen Struktur des Kommunikationssystems, d.h. bei einer indirekten Verbindung beispielsweise zu einem ersten Endgerät über eine Zentrale zu einem zweiten Endgerät, ein großer Vorteil im Hinblick auf die benötigte Bandbreite. Im Vergleich zur vorgeschlagenen direkten Verbindung wird in diesem Fall nämlich die doppelte Bandbreite benötigt.

Eine direkte von dem jeweiligen Ort, an dem die verschiedenen Dienste zur Verfügung stehen, ausgehende Verteilung der Dienste wird dadurch erreicht, daß das Kommunikationssystem zur Verteilung der von den Signalquellen der externen Diensteanbieter gelieferten Signale jeweils eine Signalaufbereitungseinrichtung aufweist, die zur Verteilung der Signale jeweils an die entsprechenden Endgeräte vorgesehen sind.

Auf eine zusätzliche Verkabelung zur Verteilung der Dienste kann dadurch verzichtet werden, daß mindestens eine Signalaufbereitungseinrichtung und mindestens ein Endgerät Mittel zur drahtlosen, bidirektionalen Verbindung aufweisen.

Eine umfassende Kommunikation ohne unnötige Belastung der zwischen Signalaufbereitungseinrichtung und Endgerät zur Verfügung stehenden Verbindungen kann dadurch gewährleistet werden, daß das Kommunikationssystem weitere Endgeräte aufweist, die nicht direkt auf die externen Signalquellen zugreifen und als Terminals für die zur Verbindung mit den Signalaufbereitungseinrichtungen vorgesehenen Endgeräten vorgesehen sind.

Eine besonders vorteilhafte Realisierung der Verbindungen wird dadurch erreicht, daß das Kommunikationssystem nach einem Kanalzugriffsverfahren, insbesondere nach einem TDMA- und/oder einem FDMA-Verfahren arbeitet.

Eine vorteilhafte kostengünstige Verbindung zwischen benachbarten Endgeräten ist die, daß zur Verbindung zwischen stationären oder quasistationären Endgeräten eine Infrarot-Verbindung vorgesehen ist.

Die Belastungen in Form von hochfrequenten Strahlungen kann dadurch auf ein Minimum reduziert werden, daß die Signalaufbereitungseinrichtungen und die Endgeräte Mittel zur Regelung der Sendeleistung aufweisen.

Ein Mißbrauch von Diensten kann dadurch verhindert werden, daß das Kommunikationssystem Mittel zur Kontrolle einer Zugangsberechtigung zu bestimmten Diensten aufweist.

Eine für bestehende und kommende Anforderungen ausreichende Konfiguration des Kommunikationssystems wird dadurch erreicht, daß die Signalaufbereitungseinrichtungen zur Aufbereitung von analogen und/oder digitalen Ton- und/oder Bildsignalen, insbesondere von Rundfunk-, Fernseh- und/oder Telefonsignalen vorgesehen sind.

Der jeweilige Datentransfer zwischen den Signalsenken und den Endgeräten erfolgt dadurch, daß die Signalaufbearbeitungseinrichtungen und die Endgeräte jeweils ein Modem zum Zugriff auf die externen Dienste und zur Anpassung an die jeweilige Kommunikation zwischen Signalaufbearbeitungseinrichtung und Endgerät aufweisen.

Im folgenden wird die Erfindung anhand der in den Figuren dargestellten Ausführungsbeispiele näher beschrieben und erläutert.

Es zeigen:
- Fig. 1: ein erstes Ausführungsbeispiel eines Kommunikationsnetzes und
- Fig. 2: ein weiteres Ausführungsbeispiel eines IN-House-Kommunikationsnetzes und
- Fig. 3: ein weiteres Ausführungsbeispiel eines IN-House-Kommunikationsnetzes mit Heizungssteuerung und Überwachungseinrichtung.

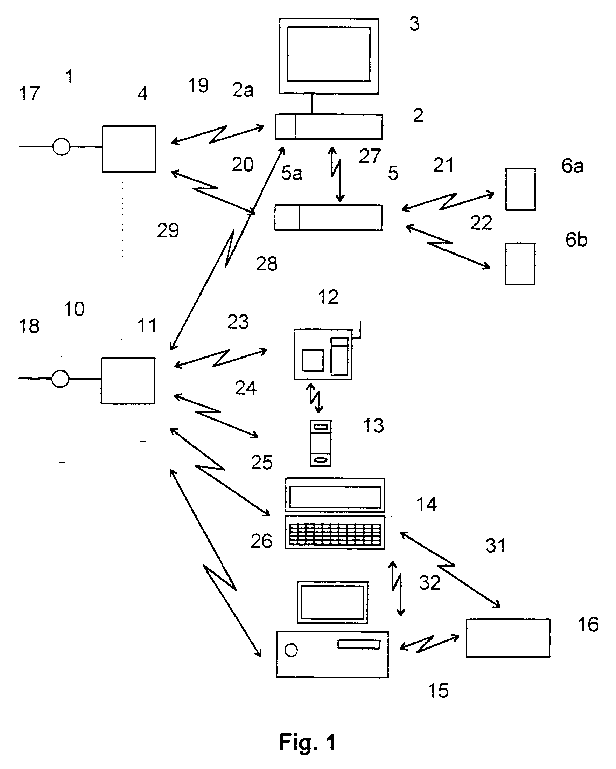

Das in Fig. 1 dargestellte Kommunikationssystem weist eine erste Signalquelle 1 auf, die zur Verteilung von Fernsehsignalen 17 vorgesehen ist, die über Kabel, Satellit oder terrestrisch empfangen werden. Die Signale 17 der Signalquelle 1 werden einer Signalaufbereitungseinrichtung 4 zugeführt, die Signalaufbereitungseinrichtung 4 dient der Verteilung der Signale 17 an Endgeräte 2, 3, 5. Die Endgeräte 2, 3, 5 sind bei dem in Fig. 1 dargestellten Ausführungsbeispiel ein TV-Empfänger 2 mit einer Empfangseinrichtung 2a, ein Bildschirm 3 sowie eine Rundfunk-Empfangseinrichtung 5 mit einem Empfangsteil 5a. Zwischen TV-Empfangseinrichtung 2 und Rundfunk-Empfangseinrichtung 5 ist ebenfalls eine Funkschnittstelle 27 vorgesehen. Die Übertragung der Signale 17 zwischen der Signalaufbereitungseinrichtung 4 und dem Fernseh- bzw. Rundfunkempfänger 2, 5 erfolgt dabei drahtlos über Funkschnittstellen 19, 20. Die vom Rundfunkempfänger 5 empfangenen Signale, können über weitere Funkschnittstellen 21, 22, die beispielsweise als Infrarotschnittstellen ausgebildet sind, an Lautsprecher 6a, 6b verteilt werden. Das in Fig. 1 dargestellte Kommunikationssystem weist darüberhinaus eine zweite Signalquelle 10 zum Empfang von Telefonsignalen 18 auf. Die Telefonsignale 18 werden einer zweiten Signalaufbereitungseinrichtung 11 zugeführt, die über Funkschnittstellen 23 ...26 mit Endgeräten 12.. 16 verbindbar ist. Als Endgeräte sind bei dem in Fig. 1 dargestellten Ausführungsbeispiel ein Telefonapparat 12, ein schnurloser Telefonapparat 13, ein tragbarer Personalcomputer 14 sowie ein stationärer Personalcomputer 15 mit über eine Schnittstelle 31 anschließbarem Drucker 16 vorgesehen. Eine Verbindung zwischen stationärem 15 und tragbarem Personalcomputer 15 ist über eine weitere Schnittstelle 32 möglich. Das in Fig. 1 dargestellte Kommunikationssystem weist darüberhinaus eine gestrichelt eingezeichnete Verbindungsmöglcihkeit zwischen den Signalaufbereitungseinrichtungen 4 und 11 auf, wodurch eine Verbindung der verschiedenen Signalquellen möglich wird. Außerdem ist über eine Funkschnittstelle 28 auch eine Kopplung der TV-Empfangseinrichtung 2 an die zweite Signalquelle 10 vorgesehen.

Das in Fig. 1 dargestellte Kommunikationssystem beruht auf einer dezentralen Struktur der Signalquellen 1, 10, d.h. die Signalquellen 1, 10 bzw. die entsprechenden Signalaufbereitungseinrichtungen 4, 11 sind mit den jeweiligen Endgeräten 2, 3, 5 - 12... 15 direkt über die drahtlose In-House-Verbindung verbunden. Eine derartige dezentrale Struktur des Kommunikationssystems hat den Vorteil, daß alle Dienste der Signalquellen 1, 10 am jeweiligen Ort, wo diese zur Verfügung stehen, direkt verteilt werden können, ohne daß sie zentral zu einem Datenstrom zusammengefaßt werden müssen. Hierdurch kann ein zusätzlicher Verkabelungsaufwand zu einer ansonsten notwendigen Zentralstation vermieden werden. Bei der Signalquelle 1 handelt es sich beispielsweise um eine Datenquelle, die Fernsehsignale bereitstellt, die über die Verbindungsleitung 17 an die Signalaufbereitungseinrichtung 4 geliefert werden. Die Signalaufbereitungseinrichtung 4 dient zur Decodierung der von der Signalquelle 1 gelieferten Fernsehsignale sowie zur Abstrahlung der entsprechend aufbereiteten Fernsehsignale an die jeweiligen Endgeräte 2, 3, 5. Durch die drahtlose Anbindung der Endgeräte 2, 3, 5 an die Signalaufbereitungseinrichtung 4 entfällt somit innerhalb beispielsweise einer Wohneinheit ein zusätzlicher Verkabelungsaufwand. Die Anbindung der Endgeräte 2, 3, 5 an die Signalaufbereitungseinrichtung 4 erfolgt über die Luftschnittstellen 19, 20. In entsprechender Weise werden die von der Signalquelle 10 über die Verbindungsleitung 18 gelieferten Telefonsignale von der zweiten Signalaufbereitungseinrichtung 11 an die mit dieser koppelbaren Endgeräte 12 ... 15 übermittelt. Über eine Verbindungsleitung 19 bzw. durch direkte Anbindung an die jeweilige Signalaufbereitungseinrichtung ist es auch möglich, daß bestimmte Endgeräte, wie beispielsweise der PC 15 mit mehreren Signalquellen 1, 10 in Verbindung steht. Hierdurch wird es beispielsweise möglich, daß der PC 15 auch Signale aus der Signalquelle 1 empfangen kann. Somit weist das in Fig. 1 dargestellte Kommunikationssystem Endgeräte auf, die auf keinen Dienst zugreifen, wie dies beispielsweise bei den in Fig. 1 dargestellten Lautspechern 6a, 6b sowie dem Drucker 16 der Fall ist. Darüberhinaus sind auch Endgeräte vorgesehen, die lediglich einen einzigen Dienst nutzen, wie dies beispielsweise bei dem Telefon 12, 13 der Fall ist. Insgesamt entsteht durch das in Fig. 1 dargestellte Kommunikationssystem eine flexible Anbindung an die entsprechenden Signalquellen 1, 10. Damit ein direkter paralleler Zugriff der verschiedenen Endgeräte auf die unterschiedlichen Signalquellen 1, 10 möglich ist, weisen die Signalaufbereitungseinrichtungen 4, 11, sowie die Endgeräte 2, 3, 5; 12... 15 entsprechende Modems, die der Adressierung der An- bzw. Abmeldung dienen. Als Übertragungsverfahren wird ein Kanalzugriffsverfahren, wie beispielsweise CDMA, TDMA oder FDMA bzw. eine Kombination dieser Verfahren verwendet. Als robustes Verfahren ist in dieser Hinsicht das CDMA-Verfahren in Kombination mit dem Spread-Spektrum Modulationsverfahren geeignet. Darüberhinaus bietet dieses Verfahren eine erhöhte Sicherheit in Bezug auf eine Datenschutzproblematik. Über die Funkschnittstelle 28 zwischen TV-Empfangseinrichtung 2 und Signalaufbereitungseinrichtung 11 für die zweite Signalquelle 10 ist beispielsweise ein Empfang von Telefaxnachrichten oder ein Zugriff auf Kommunikationsdienste, wie beispielsweise das Internet möglich.

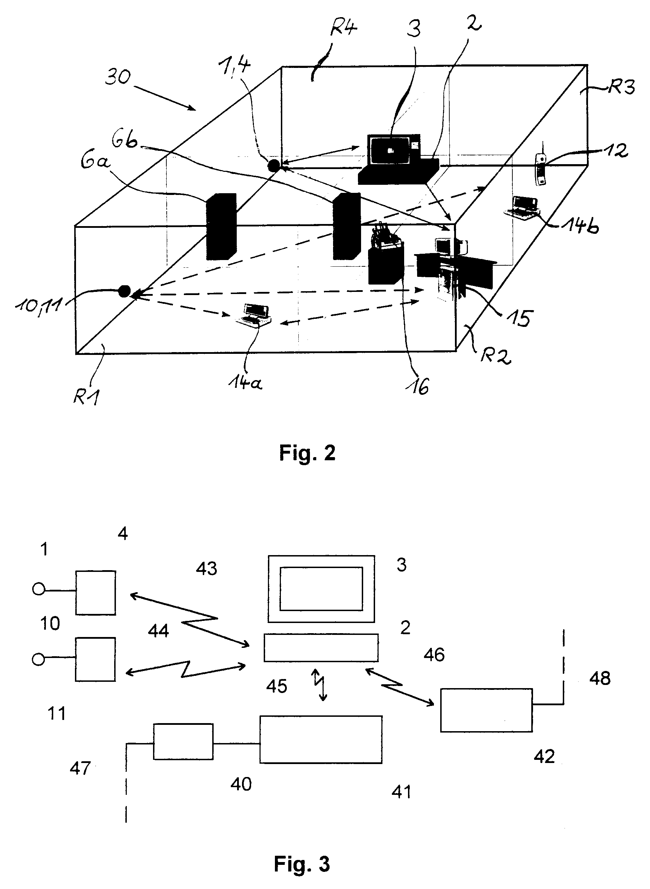

Fig. 2 zeigt ein weiteres Ausführungsbeispiel eines Kommunikationssystems am Beispiel eines möglichen Szenarios eines drahtlosen In-House-Netzes. Das zu versorgende Haus bzw. zu versorgende Wohneinheit besteht aus Räumen R1, R2, R3, R4. Im Raum R1 befindet sich ein Anschluß 1 zum Empfang von Fernsehsignalen beispielsweise über Kabel, Satellit bzw. über terrestrische Empfangsmöglichkeiten. Im Raum R1 ist darüberhinaus ein Anschluß 10 vorgesehen, der beispielsweise als ISDN-Telefonanschluß ausgebildet ist. Über diese jeweils dezentral angeordneten Anschlüsse 1, 10 erfolgt die Versorgung der kompletten Wohneinheit R1...R4. So sind im Raum R4 eine TV-Empfangseinheit 2 mit Monitor bzw. Fernsehempfangsgerät 3 vorhanden. Im Raum R4 befinden sich darüberhinaus zwei Lautsprecher 6a, 6b, die beispielsweise über drahtlose Infrarotanbindung an das Fernsehgerät 3 gekoppelt sind. Im Raum R1 ist ein tragbarer Personalcomputer 14a vorgesehen, der mit der Signalaufbereitungseinrichtung 11, der Signalquelle 10 sowie mit einem stationär installierten Computer 15 Raum R2 koppelbar ist. Im Raum R2 befindet sich darüberhinaus ein Drucker 16, der über eine Infrarotschnittstelle mit dem fest installierten PC 15 verbindbar ist, während im Raum R3 ein weiterer tragbarer Personalcomputer 14b sowie ein schnurloser Telefonapparat 12 vorhanden sind.

Durch die in Fig. 2 gezeigte dezentrale Netzstruktur sind die Sendegeräte, z.B. der Decoder für digitale TV 2 direkt mit den jeweiligen Empfangsgeräten, z.B. mit dem Fernsehgerät 3 verbunden. Hierdurch erfolgt direkt am Entstehungsort für jeden Dienst, der für die Bewohner der Wohneinheit zur Verfügung gestellt wird, die Umsetzung auf die drahtlose In-House-Verbindung. Eine aufwendige Umsetzung in einen zentralen Datenstrom, der beispielsweise mehrere Dienste zentral versorgt, ist somit entbehrlich. Ein zusätzlicher Verkabelungsaufwand, der bei der Verkabelung von zentral vorgesehenen Strukturen erforderlich wäre, ist somit ebenfalls überflüssig. Das in Fig. 2 dargestellte Kommunikationssystem weist darüberhinaus eine sehr hohe Flexibilität aus, da ein Aufbau in kleinen Schritten hin zu einem komplexen System entsprechend den jeweiligen Anforderungen ohne großen Aufwand möglich ist. Darüberhinaus können bereits vorhandene Geräte innerhalb des Kommunikationssystems wie beispielsweise ein ohnehin vorhandener Fernsehapparat oder Personalcomputer weiter verwendet werden. Lediglich sind die ggfs. benötigten Schnittstellen zu ergänzen. Auf Grund der dezentralen Netzstruktur ist es darüberhinaus möglich, daß mehrere Empfänger einen gleichzeitigen Zugang zu einer Signalquelle haben. So können beispielsweise auch die Signalquelle 1 zum Empfang von Fernsehprogramm sowohl die Empfangseinrichtung 2, als auch der PC 15 zugreifen. Bei der Planung des in Fig. 2 dargestellten Kommunikationssystems kann eine lokale Anordnung der jeweiligen Signalaufbereitungseinrichtung 4, 11 für die jeweiligen Signalquellen 1, 10 jeweils dort erfolgen, wo die Signalquellen zur Verfügung stehen oder wo die Dienste in räumlicher Nähe benötigt werden. Bei einer Anordnung in räumlicher Nähe zu den jeweiligen Endgeräten kann die jeweilige Sendeleistung/Empfangsleistung der Signalaufbereitungseinrichtungen 4, 10 bzw. der jeweiligen Endgeräte 2, 3; 12, 15 somit auf ein Minimum reduziert werden. Hierzu weist das Kommunikationssystem eine entsprechende Empfangsleistungsregelung (Power Control) auf. Diese Empfangs/Sendeleistungsregelung ist derart ausgebildet, daß der Empfänger bei direkter Plazierung neben dem Sender auf minimale Empfangsleistung eingestellt ist und bei maximaler Distanz oder zusätzlicher Dämpfung beispielsweise durch Wände seine volle Empfangsleistung abgibt. Durch das außerhalb der Wohneinheit vorgesehene Bezugszeichen 30 mit entsprechendem Pfeil ist symbolisiert, daß in das Kommunikationssystem auch die Kommunikation mit weiteren Diensten, beispielsweise über Funkkommunikationsdienst wie GSM oder DAB-Dienste, eingebunden werden kann.

Fig. 3 zeigt ein weiteres Ausführungsbeispiel eines lokalen und drahtlosen Kommunikationssystems. Das in Fig. 3 dargestellte Kommunikationssystem besteht aus Signalquellen 1, 10 mit jeweiligen Signalaufbereitungseinrichtungen 4, 11. Die Signalaufbereitungseinrichtungen, 4, 11 sind zur Aufbereitung von Fernseh- bzw. Telefonsignalen vorgesehen. Die Signalaufbereitungseinrichtungen 4, 11 sind über Funkschnittstellen 43, 44 mit einer Einrichtung 2 verbunden, die als Schnittstelle zu einem Fernsehgerät 3 sowie über weitere Funkschnittstellen 45, 46 zu einer Heizungssteuereinrichtung 41 sowie einer Sicherheitssteuerungseinrichtung 42 dient. Die Heizungssteuerungseinrichtung 41 ist an die Heizungszentrale 40 angekoppelt, während die Sicherheitssteuerungseinrichtung 42 mit beispielsweise an Fenstern, Türen etc. angeordneten Signalgebern verbunden ist.

Mit Hilfe des in Fig. 3 dargestellten Kommunikationssystems ist neben den im Zusammenhang mit den Fig. 1 und 2 beschriebenen Diensten auch eine Steuerung der Heizungsanlage 40 sowie einer Alarmanlage 42 möglich. Über die drahtlose Anbindung an die Telefonschnittstelle 10, 11 ist auch eine Steuerung der Heizungsanlage 40 sowie der Sicherungsanlage 42 möglich. Der Anwendungsbereich der jeweiligen Kommunikationssysteme in den Fig. 1 - 3 ist neben der gezeigten Konfiguration auch in beliebigen Kombinationen untereinander möglich.

## Patentansprüche

1. Kommunikationssystem mit mindestens zwei voneinander unabhängigen Signalquellen (1, 10) externer Diensteanbeieter und mit mindestens zwei Endgeräten (2, 3, 5 ; 11 .. 16) als Signalsenken zum direkten Empfang der von den Signalquellen (1, 10) ausgesendeten Signale.

2. Kommunikationssystem nach Anspruch 1,
**dadurch gekennzeichnet,**
daß das Kommunikationssystem zur Verteilung der von den Signalquellen (1, 10) der externen Diensteanbieter gelieferten Signale (17, 18) jeweils eine Signalaufbereitungseinrichtung (4, 11) aufweist, die zur Verteilung der Signale (17, 18) jeweils an die entsprechenden Endgeräte (2, 3, 5 ; 11 .. 16) vorgesehen ist.

3. Kommunikationssystem nach einem der Ansprüche 1 oder 2,
**dadurch gekennzeichnet,**
daß mindestens eine Signalaufbereitungseinrichtung (4, 11) und mindestens ein Endgerät (2, 3, 5 ; 11 .. 16) Mittel zur drahtlosen, bidirektionalen Verbindung aufweisen.

4. Kommunikationssystem nach einem der Ansprüche 1 bis 3,
**dadurch gekennzeichnet,**
daß das Kommunikationssystem weitere Endgeräte (6a, 6b, 16) aufweist, die nicht direkt auf die externen Signalquellen (1, 10) zugreifen und als Terminals für die zur Verbindung mit den Signalaufbereitungseinrichtungen (4, 11) vorgesehenen Endgeräten (2, 3, 5 ; 11 .. 16) vorgesehen sind.

5. Kommunikationssystem nach einem der Ansprüche 1 bis 4,
**dadurch gekennzeichnet,**
daß das Kommunikationssystem nach einem Kanalzugriffsverfahren, insbesondere nach einem TDMA- und/ der einem FDMA-Verfahren arbeitet.

6. Kommunikationssystem nach einem der Ansprüche 1 bis 5,
**dadurch gekennzeichnet,**
daß zur Verbindung zwischen stationären oder quasistatoinären Endgeräten (5, 6a, 6b) eine Infrarot-Verbindung vorgesehen ist.

7. Kommunikationssystem nach einem der Ansprüche 1 bis 6,
**dadurch gekennzeichnet,**
daß die Signalaufbereitungseinrichtungen (4, 11) und die Endgeräte (2, 3, 5 ; 11 .. 16) Mittel zur Regelung der Sendeleistung aufweisen.

8. Kommunikationssystem nach einem der Ansprüche 1 bis 7,
**dadurch gekennzeichnet,**
daß das Kommunikationssystem Mittel zur Kontrolle einer Zugangsberechtigung zu bestimmten Diensten aufweist.

9. Kommunikationssystem nach einem der Ansprüche 1 bis 8,
**dadurch gekennzeichnet,**
daß die Signalaufbereitungseinrichtungen (4, 11) zur Aufbereitung von analogen und/oder digitalen Ton- und/oder Bildsignalen, insbesondere von Rundfunk-, Fernseh- und/oder Telefonsignalen vorgesehen sind.

10. Kommunikationssystem nach einem der Ansprüche 1 bis 9,
**dadurch gekennzeichnet,**
daß die Signalaufbereitungseinrichtungen (4, 11) und die Endgeräte (2, 3, 5 ; 11 .. 16) jeweils ein Modem zum Zugriff auf die externen Dienste (1, 10) und zur Anpassung an die jeweilige Kommunikation zwischen Signalverarbeitunseinrichtung (4, 11) und Endgerät (2, 3, 5 ; 11 .. 16) aufweisen.
